# EUROPEAN PATENT APPLICATION

(11) **EP 4 608 038 A1**
(43) Date of publication of application: **27.08.2025**
(21) Application number: 23884667.9
(22) Date of filing: 24.10.2023
(51) Int. Cl.: H04W 72/1263

(54) **SCHEDULING REQUEST PROCESSING METHOD AND APPARATUS**

(30) Priority: 31.10.2022 CN 202211347424
(71) Applicant: Huawei Technologies Co., Ltd., Shenzhen, Guangdong 518129 (CN)
(72) Inventor: XIANG, Hongyu, Shenzhen, Guangdong 518129 (CN); XU, Bin, Shenzhen, Guangdong 518129 (CN)
(74) Representative: Körber, Martin Hans
(86) International application number: PCT/CN2023/126226
(87) International publication number: WO 2024/093735

(57) **Abstract**

A scheduling request processing method and apparatus are applicable to a non-terrestrial network NTN scenario. The method includes: A first entity determines that a first scheduling request SR in a pending state exists. When a first condition is satisfied, the first entity indicates a second entity to send the first SR. The first condition includes: The first entity has an SR transmission occasion on a valid physical uplink control channel PUCCH resource for SR configured, and the first entity receives no uplink synchronization loss indication. Based on this solution, when the first entity has the SR transmission occasion on the valid PUCCH resource for SR configured, to indicate the second entity to send the first SR, at least a condition that the first entity receives no uplink synchronization loss indication needs to be satisfied. In other words, a terminal device may be limited not to send an SR when uplink synchronization is lost, to reduce a power waste of the terminal device, and reduce a waste of resources occupied for sending the SR.

## Description

This application claims priority to Chinese Patent Application No. 202211347424.6, filed with the China National Intellectual Property Administration on October 31, 2022 and entitled "SCHEDULING REQUEST PROCESSING METHOD AND APPARATUS", which is incorporated herein by reference in its entirety.

### TECHNICAL FIELD

Embodiments of this application relate to the communication field, and in particular, to a scheduling request processing method and apparatus.

### BACKGROUND

A scheduling request (scheduling request, SR) is mainly used to request an uplink resource for new transmission. The SR may be triggered in scenarios such as beam failure recovery, preemptive buffer status reporting, or consistent listen before talk failure recovery (consistent Listen Before Talk failure recovery).

After the SR is triggered, it may be considered that the SR is in a pending (pending) state. For the SR in the pending state, if there is no valid physical uplink control channel (physical uplink control channel, PUCCH) resource, a terminal device starts a random access procedure, and cancels the SR. If there is a valid PUCCH resource and a maximum quantity of transmissions of the SR is not reached, the terminal device sends the SR by using the PUCCH resource.

However, in some scenarios, the terminal device may be in an uplink out-of-synchronization state or an uplink synchronization state. Therefore, in a scenario in which whether the terminal device is synchronized is considered, how to process the SR in the pending state is an urgent problem to be resolved currently.

### SUMMARY

This application provides a scheduling request processing method and apparatus. In a scenario in which a synchronization state of a terminal device is considered, to send an SR in a pending state, at least a condition that a first entity receives no uplink synchronization loss indication needs to be satisfied.

According to a first aspect, a scheduling request processing method is provided. The method may be performed by a terminal device, or may be performed by a component of a terminal device, for example, a processor, a chip, or a chip system of the terminal device, or may be implemented by a logic module or software that can implement all or a part of functions of a terminal device. The method includes: A first entity determines that a first scheduling request SR in a pending state exists. When a first condition is satisfied, the first entity indicates a second entity to send the first SR. The first condition includes: The first entity has an SR transmission occasion on a valid physical uplink control channel PUCCH resource for SR configured, and the first entity receives no uplink synchronization loss indication.

Based on this solution, when the first entity has the SR transmission occasion on the valid PUCCH resource for SR configured, to indicate the second entity to send the first SR, at least a condition that the first entity receives no uplink synchronization loss indication needs to be satisfied. In other words, even if the first entity has the SR transmission occasion on the valid PUCCH resource for SR configured, if the first entity receives the uplink synchronization loss indication (that is, the terminal device is in an uplink out-of-synchronization state), the first entity cannot indicate the second entity to send the first SR.

In other words, based on a limitation of the first condition, the terminal device can be prevented from sending an SR when uplink synchronization is lost. Even if the terminal device sends the SR when the uplink synchronization is lost, an access network device cannot successfully receive the SR because the uplink synchronization of the terminal device is lost. Therefore, the terminal device is limited not to send the SR when the uplink synchronization is lost. This can reduce a power waste of the terminal device, and reduce a waste of resources occupied for sending the SR.

In a possible design, that the first entity receives no uplink synchronization loss indication includes: The first entity receives no uplink synchronization loss indication before the SR transmission occasion.

In a possible design, that the first entity receives no uplink synchronization loss indication before the SR transmission occasion includes: The first entity receives no uplink synchronization loss indication after the first SR is triggered and before the SR transmission occasion.

In a possible design, that the first entity receives no uplink synchronization loss indication includes: A latest indication received by the first entity is an uplink synchronization indication.

According to a second aspect, a scheduling request processing method is provided. The method may be performed by a terminal device, or may be performed by a component of a terminal device, for example, a processor, a chip, or a chip system of the terminal device, or may be implemented by a logic module or software that can implement all or a part of functions of a terminal device. The method includes: A first entity determines that a first scheduling request SR in a pending state exists. When a second condition is satisfied, a random access procedure is started, and the first SR is canceled. When a third condition is satisfied, the first entity sends a random access preamble indication to a second entity, or the first entity determines not to send a random access preamble indication to a second entity. The second condition includes: The first entity has no valid physical uplink control channel PUCCH resource, and the first entity receives no uplink synchronization loss indication. The third condition includes: The first entity has no valid PUCCH resource, and the first entity receives an uplink synchronization loss indication. The random access preamble indication indicates the second entity to send a random access preamble. The valid PUCCH resource corresponds to the first SR.

Based on this solution, when the first entity has no valid PUCCH resource, to start the random access procedure and cancel the first SR, at least a condition that the first entity receives no uplink synchronization loss indication needs to be satisfied. In other words, even if the first entity has no valid PUCCH resource, if the first entity receives the uplink synchronization loss indication (that is, the terminal device is in an uplink out-of-synchronization state), the first entity cannot start the random access procedure. In other words, based on a limitation of the second condition, the terminal device can be prevented from starting random access in the uplink out-of-synchronization state, to reduce a power waste of the terminal device, and reduce a waste of resources occupied for random access.

In addition, when the first entity receives the uplink synchronization loss indication, that is, the terminal device is in an uplink out-of-synchronization state, the first entity does not send the random access preamble indication to the second entity, that is, does not start random access. In other words, based on a limitation of the third condition, the terminal device can be prevented from starting random access in the uplink out-of-synchronization state, to reduce a power waste of the terminal device, and reduce a waste of resources occupied for random access.

In a possible design, after the first entity sends the random access preamble indication to the second entity, the method further includes: If the first entity receives an uplink synchronization indication, the first entity sends indication information to the second entity, where the indication information is used to cancel sending of the random access preamble.

In a possible design, the method further includes: The first entity indicates the second entity to send the first SR on the valid PUCCH resource.

Based on the foregoing two possible implementations, after uplink synchronization is recovered, sending of the random access preamble may be canceled. In this case, if there is a valid PUCCH resource, the first entity may indicate the second entity to send the first SR on the PUCCH resource, to reduce latency caused by execution of random access. In other words, in comparison with a solution in which a random access preamble is still sent, latency in sending the first SR can be reduced.

In a possible design, when the third condition is satisfied, the method further includes: starting a first timer. That the first entity receives the uplink synchronization indication includes: The first entity receives the uplink synchronization indication before the first timer expires.

In a possible design, when the third condition is satisfied, the method further includes: starting a second timer. That the first entity determines not to send a random access preamble indication to a second entity includes: The first entity determines not to send the random access preamble indication to the second entity before the second timer expires.

According to a third aspect, a communication apparatus is provided, configured to implement various methods. The communication apparatus may be the terminal device in the first aspect or the second aspect, or an apparatus included in the terminal device, for example, a chip, a chip system, or a module. The communication apparatus includes a corresponding module, unit, or means (means) for implementing the method. The module, unit, or means may be implemented by hardware, software, or hardware executing corresponding software. The hardware or the software includes one or more modules or units corresponding to functions.

In some possible designs, the communication apparatus may include a processing module and a communication module. The processing module may be configured to implement a processing function in any one of the foregoing aspects and any possible implementation of the foregoing aspects. The communication module is configured to implement a sending function and/or a receiving function in any one of the foregoing aspects and any possible implementation of the foregoing aspects. The communication module may include a transceiver circuit, a transceiver machine, a transceiver, or a communication interface.

In some possible designs, the communication module includes a sending module and/or a receiving module, respectively configured to implement the sending or receiving function in any one of the foregoing aspects and any possible implementation of the foregoing aspects.

According to a fourth aspect, a communication apparatus is provided, including a processor and a communication interface. The communication interface is configured to communicate with a module outside the communication apparatus, and the processor is configured to execute a computer program or instructions, to cause the communication apparatus to perform the method in any aspect. The communication apparatus may be the terminal device in the first aspect or the second aspect, or an apparatus included in the terminal device, for example, a chip, a chip system, or a module.

According to a fifth aspect, a communication apparatus is provided, including at least one processor. The processor is configured to execute a computer program or instructions stored in a memory, to cause the communication apparatus to perform the method in any aspect. The memory may be coupled to the processor, or the memory may be independent of the processor. For example, the memory and the processor are two independent modules. The memory may be located outside the communication apparatus, or may be located inside the communication apparatus. The communication apparatus may be the terminal device in the first aspect or the second aspect, or an apparatus included in the terminal device, for example, a chip, a chip system, or a module.

According to a sixth aspect, a computer-readable storage medium is provided. The computer-readable storage medium stores a computer program or instructions. When the computer program or the instructions is/are run on a communication apparatus, the communication apparatus is caused to perform the method in any aspect.

According to a seventh aspect, a computer program product including instructions is provided. When the computer program product runs on a communication apparatus, the communication apparatus is caused to perform the method in any aspect.

It may be understood that when the communication apparatus provided in any one of the third aspect to the seventh aspect is a chip, a sending action/function may be understood as outputting information, and a receiving action/function may be understood as inputting information.

It may be understood that when the communication apparatus provided in any one of the third aspect to the seventh aspect is a chip system, the communication apparatus may include a chip, or may include a chip and another discrete component.

For technical effects brought by any design manner in the third aspect to the seventh aspect, refer to technical effects brought by different design manners in the first aspect or the second aspect. Details are not described herein again.

### BRIEF DESCRIPTION OF DRAWINGS

FIG. 1 is a diagram of a structure of a communication system according to this application;
FIG. 2 is a diagram of a structure of a non-terrestrial network according to this application;
FIG. 3 is a diagram of another structure of a non-terrestrial network according to this application;
FIG. 4 is a diagram of still another structure of a non-terrestrial network according to this application;
FIG. 5 is a diagram of yet another structure of a non-terrestrial network according to this application;
FIG. 6a is a diagram of a structure of a communication apparatus according to this application;
FIG. 6b is a diagram of a structure of a terminal device according to this application;
FIG. 7 is a schematic flowchart of a scheduling request processing method according to this application;
FIG. 8 is a diagram of a time sequence according to this application;
FIG. 9 is a schematic flowchart of another scheduling request processing method according to this application;
FIG. 10a is a schematic flowchart of still another scheduling request processing method according to this application;
FIG. 10b is a diagram of another time sequence according to this application;
FIG. 11 is a diagram of another structure of a terminal device according to this application; and
FIG. 12 is a diagram of another structure of a communication apparatus according to this application.

### DESCRIPTION OF EMBODIMENTS

In descriptions of this application, unless otherwise specified, "/" indicates that associated objects are in an "or" relationship. For example, A/B may represent A or B. "And/or" in this application describes only an association relationship for describing associated objects, and indicates that three relationships may exist. For example, A and/or B may represent the following three cases: Only A exists, both A and B exist, or only B exists, where A and B may be singular or plural.

In descriptions of this application, unless otherwise specified, "a plurality of" means two or more than two. "At least one of the following items (pieces)" or a similar expression thereof refers to any combination of these items, and includes a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, terms such as "example" or "for example" are used to represent giving an example, an illustration, or a description. Any embodiment or design scheme described as "example" or "for example" in embodiments of this application should not be explained as being more preferred or having more advantages than another embodiment or design scheme. Specifically, the use of terms such as "example" or "for example" is intended to present a related concept in a specific manner, for ease of understanding.

It may be understood that an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any proper manner. It may be understood that sequence numbers of processes do not mean an execution sequence in various embodiments of this application. The execution sequence of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, an apparatus provided in embodiments of this application may also correspondingly implement these features or functions. Details are not described.

In this application, unless otherwise specified, for same or similar parts in embodiments, refer to each other. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

To facilitate understanding of the technical solutions in embodiments of this application, the following first briefly describes related technologies in this application.

### 1. Scheduling request (scheduling request, SR)

The SR is mainly used to request an uplink (uplink, UL) resource for new transmission, for example, an uplink shared channel (uplink shared channel, UL-SCH) resource.

Generally, when the SR is configured on a network, an SR resource (Scheduling Request Resource) is configured for the SR. The SR resource is located in a physical uplink control channel (physical uplink control channel, PUCCH) resource. For example, a base station may configure an SR transmission occasion on the PUCCH resource, and configure a frequency domain resource position as the SR resource. Therefore, it may also be considered that the SR configured on the network has a corresponding (configured) PUCCH resource.

For example, a possible SR resource configuration manner may be shown as follows:

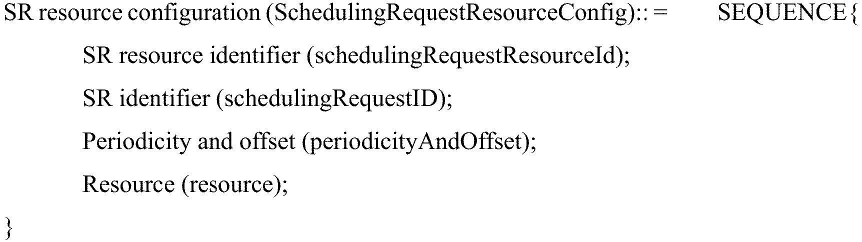

The SR resource identifier identifies an SR resource in a PUCCH. The SR identifier identifies an SR or an SR configuration. The periodicity and offset indicate an SR periodicity and a quantity of offset symbols or slots. The resource includes an identifier of a PUCCH resource, and the PUCCH resource is a PUCCH resource on which the SR resource is located, or in other words, a PUCCH resource corresponding to the SR.

After the SR is triggered, it may be considered that the SR is in a pending (pending) state, until the SR is sent or canceled. In other words, the SR in the pending state may be understood as an SR that has been triggered but has not been sent or canceled. For the SR in the pending state:

If a media access control (media access control, MAC) entity has no valid PUCCH resource, a terminal device starts a random access procedure, and cancels the SR in the pending state.

If the MAC entity has a valid PUCCH resource and a maximum quantity (sr-TransMax) of transmissions of the SR is not reached, the terminal device may send the SR by using the PUCCH resource.

It should be noted that the "pending state" in embodiments of this application may also be referred to as a "to-be-sent state", and the "pending state" and the "to-be-sent state" are interchangeable.

### 2. Non-terrestrial network (non-terrestrial network, NTN)

With development of communication requirements, a 5th generation (5th generation, 5G) network and a future evolved network not only need to meet a plurality of service requirements, but also need to provide wider service coverage. The NTN is slightly affected by geographical conditions and can achieve a goal of global coverage. Therefore, the NTN is an important direction of future communication development.

Compared with a conventional terrestrial network, the NTN uses a typical flight platform (for example, an airplane or an uncrewed aerial vehicle) or a satellite to participate in network deployment. For example, a base station or a part of functions of the base station is deployed on the flight platform or the satellite to provide coverage for a terminal, or the flight platform or the satellite is used as a relay to forward a signal of a ground base station to provide coverage for a terminal.

In the NTN, ephemeris information of the satellite or flight information (for example, a location, a speed, and a flight orbit of the flight platform) of the flight platform plays an extremely important role in communication. Satellite communication is used as an example. The terminal device may determine end-to-end latency from the terminal device to the base station by using the ephemeris information of the satellite, a location of the terminal device, and information about latency from the satellite to a satellite gateway. In this way, pre-compensation of a timing advance is performed based on the end-to-end latency. In addition, the network can learn of the timing advance of the terminal device to perform more proper data scheduling.

However, the ephemeris information of the satellite is time-sensitive. Therefore, a validity timer (validity timer) is introduced in the NTN. After receiving the ephemeris information of the satellite, a radio resource control (radio resource control, RRC) entity of the terminal device may start the validity timer. Before the validity timer expires, the ephemeris information is accurate and valid, and the terminal device is in an uplink synchronization state. After the validity timer expires, the ephemeris information becomes invalid, and the terminal device is in an uplink out-of-synchronization state, in other words, uplink synchronization is lost. After receiving the ephemeris information again subsequently, the terminal device restores the uplink synchronization state.

In addition, after receiving the ephemeris information, the RRC entity may send an uplink synchronization indication to the MAC entity, to indicate that the terminal device is in the synchronization state. When the validity timer expires, the RRC entity may send an uplink synchronization loss indication to the MAC entity, to indicate that the uplink synchronization of the terminal device is lost, or indicate that the terminal device is in the uplink out-of-synchronization state.

When the terminal device is in the uplink out-of-synchronization state, the terminal device clears a hybrid automatic repeat request (hybrid automatic repeat request, HARQ) buffer, and stops sending an uplink signal, for example, a MAC control element (media access control control element, MAC CE) or an RRC message. In the uplink out-of-synchronization state, the base station cannot correctly receive the uplink signal from the terminal device.

As described above, in a current SR processing method, for the SR in the pending state, the terminal device is required to initiate the random access procedure or send the SR. However, in the NTN, if the terminal device is in the uplink out-of-synchronization state, the terminal device is required to stop sending the uplink signal. Therefore, in a scenario in which whether the terminal device is synchronized is considered, how to process the SR in the pending state is an urgent problem to be resolved currently.

In view of this, this application provides an SR processing method. In the method, to send an SR in a pending state, there need to be a valid PUCCH resource, and a terminal device needs to be in an uplink synchronization state. Therefore, the terminal device can be prevented from sending the SR when uplink synchronization is lost, to reduce a power waste of the terminal device, and reduce a waste of resources.

The technical solutions in embodiments of this application may be applied to various communication systems. The communication system may be a 3rd generation partnership project (third generation partnership project, 3GPP) communication system, for example, a 5G system such as a long term evolution (long term evolution, LTE) system or a new radio (new radio, NR) system, a satellite communication system, an NTN system, a vehicle to everything (vehicle to everything, V2X) system, an LTE and 5G hybrid networking system, a device-to-device (device-to-device, D2D) communication system, a machine-to-machine (machine-to-machine, M2M) communication system, internet of things (Internet of Things, IoT), or a future evolved communication system. Alternatively, the communication system may be a non-3GPP communication system. This is not limited.

The technical solutions in embodiments of this application may be applied to various communication scenarios, for example, may be applied to one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine type communications (massive machine type communications, mMTC), D2D, V2X, and IoT.

The foregoing communication system and communication scenario that are applicable to this application are merely examples for description, and the communication system and the communication scenario that are applicable to this application are not limited thereto. The communication system and the communication scenario that are provided in this application do not constitute any limitation on the solutions of this application. This is uniformly described herein. Details are not described below again.

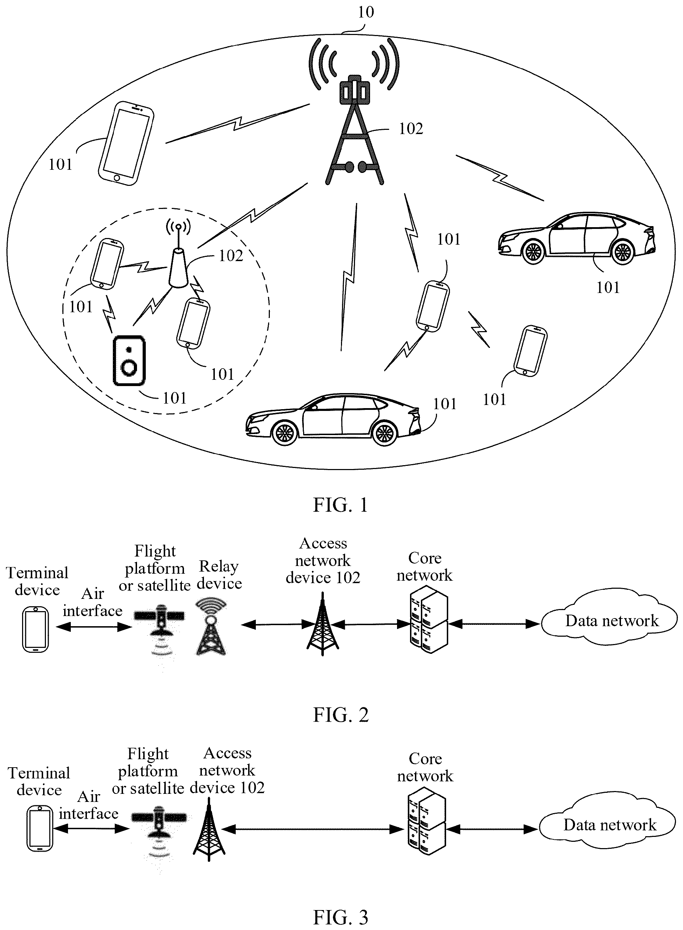

FIG. 1 shows a communication system 10 applicable to the solutions of this application provided in this application. The communication system 10 includes at least one terminal device 101 and at least one access network device 102. It should be understood that quantities of terminal devices and access network devices in FIG. 1 are merely examples, and there may be more or fewer terminal devices and access network devices.

Optionally, the terminal device 101 in embodiments of this application may be a user-side device configured to implement a wireless communication function, for example, a terminal or a chip that can be used in a terminal. The terminal may be user equipment (user equipment, UE), an access terminal, a terminal unit, a terminal station, a mobile station, a remote station, a remote terminal, a mobile device, or a wireless communication device, a terminal agent, a terminal apparatus, or the like in a 5G network or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, personal digital processing (personal digital assistant, PDA), a handheld device having a wireless communication function, a computing device or another processing device connected to a wireless modem, an in-vehicle device or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), and the like. Alternatively, the terminal may be a terminal having a communication function in IoT, for example, a terminal (for example, an internet of vehicles device) in V2X, a terminal in D2D communication, or a terminal in M2M communication. The terminal may be movable or may be fixed.

Optionally, the access network device 102 in embodiments of this application is a device that connects the terminal device 101 to a wireless network. The access network device 102 may be referred to as a node in a radio access network (radio access network, RAN), may also be referred to as a base station, or may be referred to as a radio access network node (or device).

For example, the access network device may include an evolved base station (NodeB, eNB, or e-NodeB, evolved NodeB) in an LTE system or an LTE-A system, for example, a conventional macro base station eNB and a micro base station eNB in a heterogeneous network scenario. Alternatively, the access network device may include a next generation NodeB (next generation NodeB, gNB) in an NR system. Alternatively, the access network device may include a transmission reception point (transmission reception point, TRP), a home evolved NodeB (for example, a home evolved NodeB, or a home NodeB, HNB), a baseband unit (baseband unit, BBU), a baseband pool (BBU pool), or a wireless fidelity (wireless fidelity, Wi-Fi) access point (access point, AP), and the like. Alternatively, the access network device may include a base station in the NTN, that is, may be deployed on the flight platform or the satellite. In the NTN, the access network device may be used as a layer 1 (L1) relay (relay), or may be used as a base station, or may be used as an integrated access and backhaul (integrated access and backhaul, IAB) node. Alternatively, the access network device may be a device that implements a base station function in IoT, for example, a device that implements a base station function in V2X, D2D, or machine to machine (machine to machine, M2M).

Alternatively, the access network device may be a module or a unit that can implement a part of functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like. Alternatively, the access network device may be an access network device in an open radio access network (open RAN, ORAN) system or a module of the access network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU.

Optionally, the CU and the DU may be divided based on protocol layers of a wireless network. For example, functions of a packet data convergence protocol (packet data convergence protocol, PDCP) layer and protocol layers (for example, an RRC layer and a service data adaptation protocol (service data adaptation protocol, SDAP) layer) above the PDCP layer are set on the CU, a function of a protocol layer (for example, a radio link control (radio link control, RLC) layer, a MAC layer, or a physical (physical, PHY) layer) below the PDCP layer is set on the DU. For another example, a function of a protocol layer above the PDCP layer is set on the CU, and functions of the PDCP layer and a protocol layer below the PDCP layer are set on the DU. This is not limited.

The foregoing division of processing functions of the CU and the DU based on the protocol layers is merely an example, and may also be performed in another manner. For example, the CU or the DU may have functions of more protocol layers. For another example, the CU or the DU may have a part of processing functions of the protocol layers. For example, a part of functions of the RLC layer and a function of a protocol layer above the RLC layer are set on the CU, and a remaining function of the RLC layer and a function of a protocol layer below the RLC layer are set on the DU. For another example, functions of the CU or the DU may be divided based on a service type or another system requirement, for example, may be divided based on latency. A function whose processing time needs to satisfy a latency requirement is set on the DU, and a function whose processing time does not need to satisfy the latency requirement is set on the CU.

Optionally, the base station in embodiments of this application may include base stations in various forms, for example, a macro base station, a micro base station (which may also be referred to as a small cell), a relay station, an access point, a home base station, a TRP, a transmitting point (transmitting point, TP), and a mobile switching center. This is not specifically limited in embodiments of this application.

In a possible implementation, as shown in FIG. 2, the access network device 102 may be deployed on the ground as a part of a terrestrial network, and communicates with a data network via a core network. In this case, the communication system 10 provided in this application may further include a relay device deployed on a flight platform or a satellite. The relay device serves as a layer 1 relay (L1 relay), regenerates a physical layer signal, and forwards the physical layer signal to the terminal device or the access network device.

In another possible implementation, as shown in FIG. 3, the access network device 102 may be deployed on a flight platform or a satellite, implement a function of a ground station, directly communicate with a core network, and further communicate with a data network via the core network.

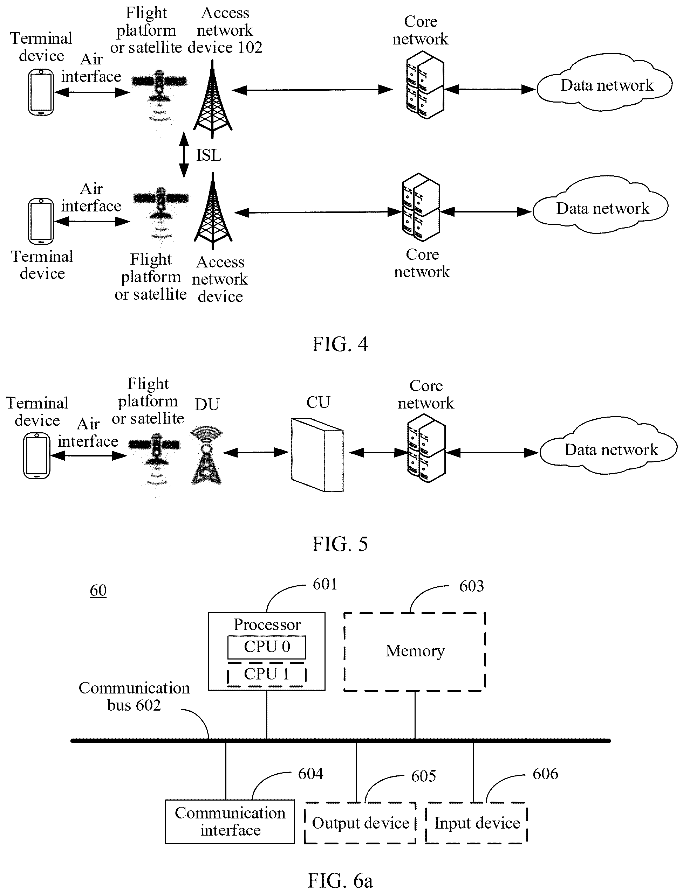

In still another possible implementation, as shown in FIG. 4, the access network device 102 may be deployed on a flight platform or a satellite, implement a function of a ground station, directly communicate with a core network, and further communicate with a data network via the core network. In addition, there is an inter-satellite link (inter-satellite link, ISL) between access network devices carried on different flight platforms or satellites, and the access network devices may communicate with each other through the ISL.

In yet another possible implementation, as shown in FIG. 5, the access network device 102 may include a DU deployed on a flight platform or a satellite and a CU deployed on the ground. The DU deployed on the flight platform or the satellite communicates with the CU deployed on the ground through an FI interface. The CU deployed on the ground communicates with a core network, and further communicates with a data network via the core network.

It should be noted that the communication system described in embodiments of this application is intended to describe the technical solutions in embodiments of this application more clearly, and does not constitute a limitation on the technical solutions provided in embodiments of this application. A person of ordinary skill in the art may learn that, with evolution of a network architecture and emergence of a new service scenario, the technical solutions provided in embodiments of this application are also applicable to a similar technical problem.

Optionally, a related function of the terminal device or the access network device in this application may be implemented by a communication apparatus 60 in FIG. 6a. Refer to FIG. 6a. The communication apparatus 60 includes one or more processors 601. Further, the communication apparatus 60 may further include a communication bus 602 and at least one communication interface (FIG. 6a is merely an example, and an example in which the communication apparatus 60 includes a communication interface 604 and one processor 601 is used for description). Optionally, the communication apparatus 60 may further include a memory 603.

The processor 601 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor or may be a multi-core (multi-CPU) processor.

In a specific implementation, in an embodiment, the processor 601 may include one or more CPUs, for example, a CPU 0 and a CPU 1 as shown in FIG. 6a.

The communication bus 602 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 6a, but it does not indicate that there is only one bus or only one type of bus. The communication bus 602 is configured to connect different components in the communication apparatus 60, so that the different components in the communication apparatus 60 can communicate and interact with each other.

The communication interface 604 may be a transceiver module, and is configured to communicate with another device or a communication network. The communication network may be, for example, an Ethernet (Ethernet), a radio access network (radio access network, RAN), a wireless local area network (wireless local area network, WLAN), or the like. For example, the communication interface 604 may be an apparatus such as a transceiver or a transceiver machine. Alternatively, the communication interface 604 may be a transceiver circuit located in the processor 601, and is configured to implement signal input and signal output of the processor.

The memory 603 may be an apparatus having a storage function. For example, the memory 603 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only Memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray optical disc, or the like), a magnetic disk storage medium or another magnetic storage device, or any other medium capable of carrying or storing expected program code in a form of instructions or a data structure and accessible by a computer. This is not limited thereto. The memory may exist independently, and is connected to the processor through the communication bus 602. Alternatively, the memory may be integrated with the processor.

The memory 603 is configured to store computer-executable instructions for performing the solutions of this application, and the processor 601 controls execution. The processor 601 is configured to execute the computer-executable instructions stored in the memory 603, to implement the method provided in embodiments of this application.

Alternatively, optionally, in embodiments of this application, the processor 601 may perform processing-related functions in methods provided in the following embodiments of this application, and the communication interface 604 is responsible for communicating with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the communication apparatus 60 may further include an output device 605 and an input device 606. The output device 605 communicates with the processor 601, and may display information in a plurality of manners. For example, the output device 605 may be a liquid crystal display (liquid crystal display, LCD), a light emitting diode (light emitting diode, LED) display device, a cathode ray tube (cathode ray tube, CRT) display device, a projector (projector), or the like. The input device 606 communicates with the processor 601, and may receive an input of a user in a plurality of manners. For example, the input device 606 may be a mouse, a keyboard, a touchscreen device, a sensing device, or the like.

It should be noted that a composition structure shown in FIG. 6a does not constitute a limitation on the communication apparatus. In addition to the components shown in FIG. 6a, the communication apparatus may include more or fewer components than those shown in the figure, or combine some components, or have a different arrangement of the components.

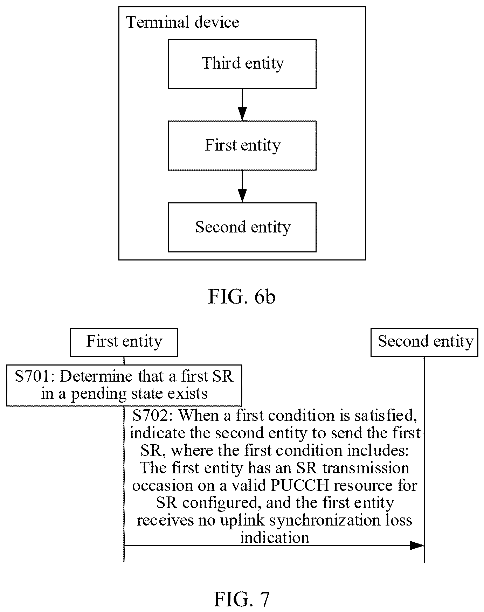

FIG. 6b is a diagram of another structure of a terminal device according to an embodiment of this application. Refer to FIG. 6b. The terminal device may include a first entity and a second entity. Optionally, the terminal device may further include a third entity. The first entity is located at an upper layer of the second entity. In other words, the first entity is an upper layer entity of the second entity. In addition, the first entity is located at a lower layer of the third entity. In other words, the first entity is a lower layer entity of the third entity.

For example, the first entity may be a MAC entity. The second entity may be a PHY entity. The third entity may be an RRC entity.

It should be noted that the structure shown in FIG. 6b does not constitute a limitation on the terminal device. In addition to the entities shown in FIG. 6b, the terminal device may include more or fewer entities than those shown in the figure. For example, the terminal device may further include an RLC entity, a PDCP entity, and the like. This is not specifically limited in this application.

The following describes in detail a scheduling request processing method provided in embodiments of this application with reference to the accompanying drawings. It may be understood that, in embodiments of this application, the terminal device may perform a part or all of the steps in embodiments of this application. These steps or operations are merely examples. In embodiments of this application, other operations or various variations of the operations may be further performed. In addition, the steps may be performed in a sequence different from a sequence presented in embodiments of this application, and not all operations in embodiments of this application need to be performed.

In an example, the following embodiment may be applied to an NTN scenario, for example, a satellite communication scenario, or another scenario in an NTN, for example, a low altitude platform (low altitude platform, LAP) subnetwork (LAP subnetwork) scenario or a high altitude platform (high altitude platform, HAP) subnetwork (HAP subnetwork) scenario. This is not specifically limited.

In addition, the following embodiment may alternatively be applied to another possible communication scenario or communication system. For example, in a long-distance communication scenario in which a distance between a terminal device and an access network device is long or a relative moving speed is fast, or a communication scenario in which a terminal device may be in a synchronization state or an out-of-synchronization state, a scheduling request may be processed by using the method provided in embodiments of this application.

FIG. 7 shows a scheduling request processing method according to this application. The scheduling request processing method is applied to a terminal device. Refer to FIG. 7. The scheduling request processing method includes the following steps.

S701: A first entity determines that a first SR in a pending state exists.

Optionally, the first SR may be triggered by one or more of the following events: beam failure recovery, preemptive buffer status reporting, timing advance reporting (Timing advance Report), or consistent listen before talk failure recovery (consistent Listen Before Talk failure recovery). After the first SR is triggered, the first entity may perceive that the first SR in the pending state exists, in other words, the first entity may determine that the first SR in the pending state exists.

S702: When a first condition is satisfied, the first entity indicates a second entity to send the first SR.

The first condition includes: The first entity has an SR transmission occasion on a valid PUCCH resource for SR configured (the first entity has an SR transmission occasion on the valid PUCCH resource for SR configured), and the first entity receives no uplink synchronization loss indication.

Optionally, that the first entity has an SR transmission occasion on a valid PUCCH resource for SR configured may also be understood as that the first entity has at least one valid PUCCH resource for a configured SR.

Optionally, the valid PUCCH resource may also be understood as an available PUCCH resource. In other words, that the PUCCH resource is valid may also be understood as that the PUCCH resource is available, or a PUCCH resource configuration is activated.

Optionally, the uplink synchronization loss indication may indicate that the terminal device loses uplink synchronization, or that the terminal device is in an uplink out-of-synchronization state, or that the terminal device loses uplink synchronization with a serving cell.

Optionally, the uplink synchronization loss indication may be generated by a third entity and sent to the first entity. For example, the third entity may maintain a timer (for example, a validity timer (validity timer)) related to a synchronization state, and send the uplink synchronization loss indication or an uplink synchronization indication to the first entity based on a running state of the timer.

For example, the third entity may start the validity timer when receiving ephemeris information of a satellite or flight information of a flight platform (for example, a location, a speed, or a flight orbit of the flight platform), and send the uplink synchronization indication to the first entity, to indicate that the terminal device is in an uplink synchronization state or that the terminal device is synchronized with the serving cell. In addition, when the timer expires, the uplink synchronization loss indication is sent to the first entity. Duration of the timer may be understood as validity duration of the ephemeris information or the flight information.

Therefore, in this scenario, that the first entity receives no uplink synchronization loss indication may include: The first entity receives no uplink synchronization loss indication from the third entity.

Optionally, the first SR may be triggered before the validity timer expires, or may be triggered after the validity timer expires. This is not specifically limited in this application.

In a possible implementation, that the first entity receives no uplink synchronization loss indication may include: A latest (or last) indication received by the first entity is the uplink synchronization loss indication. For example, the latest (or last) received indication may be understood as a last received indication before a current moment, and the current moment may be, for example, a moment at which first condition determining is performed.

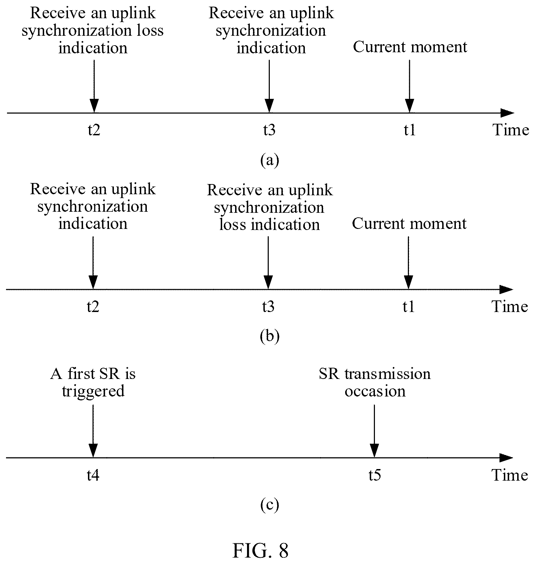

For example, as shown in (a) in FIG. 8, a current moment is denoted as a moment t1. If the first entity receives the uplink synchronization loss indication at a moment t2, and receives the uplink synchronization indication at a moment t3, a latest (or last) indication received by the first entity is the uplink synchronization indication. This is a scenario in which the first entity receives no uplink synchronization loss indication.

As shown in (b) in FIG. 8, a current moment is denoted as a moment t1. If the first entity receives the uplink synchronization indication at a moment t2, and receives the uplink synchronization loss indication at a moment t3, a latest (or last) indication received by the first entity is the uplink synchronization loss indication. This is a scenario in which the first entity receives the uplink synchronization loss indication.

In another possible implementation, that the first entity receives no uplink synchronization loss indication may include: The first entity receives no uplink synchronization loss indication before the SR transmission occasion. Further, the method may include: The first entity receives no uplink synchronization loss indication after the first SR is triggered and before the SR transmission occasion. The SR transmission occasion is the SR transmission occasion configured on the valid PUCCH resource.

For example, as shown in (c) in FIG. 8, it is assumed that the first SR is triggered at a moment t4, and the SR transmission occasion is at a moment t5. If the first entity receives no uplink synchronization loss indication between the moment t4 and the moment t5, this is a scenario in which the first entity receives no uplink synchronization loss indication. If the first entity receives the uplink synchronization loss indication between the moment t4 and the moment t5, this is a scenario in which the first entity receives the uplink synchronization loss indication.

Optionally, the first condition may further include: A quantity of transmissions of the first SR is less than a maximum quantity of transmissions of an SR. The maximum quantity of transmissions of the SR may be configured by an access network device. Certainly, the first condition may further include another restriction condition. This is not specifically limited in this application.

Optionally, that the first entity indicates the second entity to send the first SR may include: The first entity sends indication information a to the second entity. The indication information a indicates the second entity to send the first SR. When receiving the indication information a, the second entity may send the first SR on the SR transmission occasion.

Based on the foregoing solution, when the first entity has the SR transmission occasion on the valid PUCCH resource for SR configured, to indicate the second entity to send the first SR, at least a condition that the first entity receives no uplink synchronization loss indication needs to be satisfied. In other words, even if the first entity has the SR transmission occasion on the valid PUCCH resource for SR configured, if the first entity receives the uplink synchronization loss indication (that is, the terminal device is in the uplink out-of-synchronization state), the first entity cannot indicate the second entity to send the first SR.

In other words, based on a limitation of the first condition, the terminal device can be prevented from sending an SR when uplink synchronization is lost. Even if the terminal device sends the SR when the uplink synchronization is lost, the access network device cannot successfully receive the SR because the uplink synchronization of the terminal device is lost. Therefore, the terminal device is limited not to send the SR when the uplink synchronization is lost. This can reduce a power waste of the terminal device, and reduce a waste of resources occupied for sending the SR.

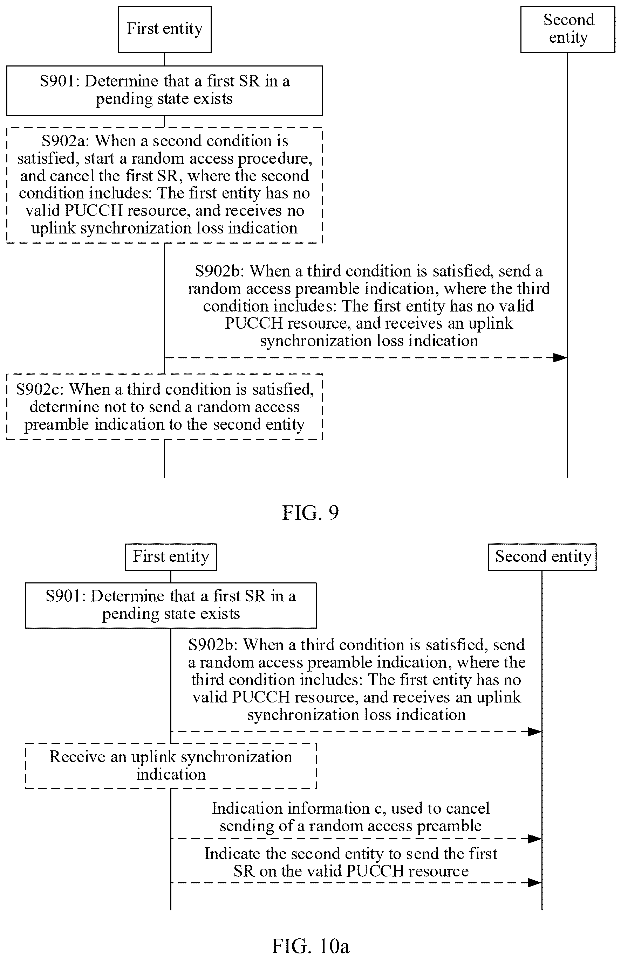

FIG. 9 shows another scheduling request processing method according to this application. The scheduling request processing method is applied to a terminal device. Refer to FIG. 9. The scheduling request processing method includes the following steps.

S901: A first entity determines that a first SR in a pending state exists. For implementation of step S901, refer to related descriptions of step S701. Details are not described herein again.

After step S901, the following step S902a, S902b, or S902c may be performed.

S902a: When a second condition is satisfied, start a random access procedure, and cancel the first SR.

The second condition includes: The first entity has no valid PUCCH resource, and the first entity receives no uplink synchronization loss indication. The valid PUCCH resource corresponds to the first SR. In other words, the PUCCH resource is a PUCCH resource configured for the first SR.

Optionally, that the first entity has no valid PUCCH resource may include: The PUCCH resource configured for the first SR is occupied by another service. In other words, a frequency domain resource that is configured for the first SR and that is corresponding to the SR transmission occasion on the PUCCH resource is occupied by another service.

For descriptions of the uplink synchronization loss indication and that the first entity receives no uplink synchronization loss indication, refer to related descriptions of step S702. Details are not described herein again.

Based on step S902a, when the first entity has no valid PUCCH resource, to start the random access procedure and cancel the first SR, at least a condition that the first entity receives no uplink synchronization loss indication needs to be satisfied. In other words, even if the first entity has no valid PUCCH resource, if the first entity receives the uplink synchronization loss indication (that is, the terminal device is in an uplink out-of-synchronization state), the first entity cannot start the random access procedure. In other words, based on a limitation of the second condition, the terminal device can be prevented from starting random access in the uplink out-of-synchronization state, to reduce a power waste of the terminal device, and reduce a waste of resources occupied for random access.

S902b: When a third condition is satisfied, the first entity sends a random access preamble indication to the second entity. The random access preamble indication indicates the second entity to send a random access preamble.

The third condition includes: The first entity has no valid PUCCH resource, and the first entity receives an uplink synchronization loss indication.

Optionally, that the first entity receives an uplink synchronization loss indication may include: A latest indication received by the first entity is the uplink synchronization loss indication; or the first entity receives the uplink synchronization loss indication after the first SR is triggered and before a configured SR transmission occasion of the first SR.

In a possible implementation, that the first entity has no valid PUCCH resource may include: The PUCCH resource configured for the first SR is occupied by another service. In other words, a frequency domain resource that is configured for the first SR and that is corresponding to the SR transmission occasion on the PUCCH resource is occupied by another service.

In another possible implementation, that the first entity has no valid PUCCH resource may include: Actually, the first entity has the SR transmission occasion on the valid PUCCH resource for SR configured, but because the first entity receives the uplink synchronization loss indication, the first entity considers that the PUCCH resource is invalid.

With reference to the foregoing two possible implementations, that is, if the first entity receives the uplink synchronization loss indication, no matter whether the PUCCH resource corresponding to the first SR is occupied or whether the PUCCH resource corresponding to the first SR exists, the first entity considers that the PUCCH resource is invalid.

Optionally, after receiving the random access preamble indication, the second entity may send the random access preamble on a configured random access occasion.

Optionally, the first entity may further send indication information b to the second entity. The indication information b may indicate a period of time (denoted as duration 1). In this scenario, the random access preamble indication and the indication information b may jointly indicate the second entity to send the random access preamble on a random access occasion after the duration 1. For example, a start moment of the duration 1 may be a moment at which the second entity receives the indication information b and parses out the duration 1.

Optionally, after the first entity sends the random access preamble indication to the second entity, the first entity may receive an uplink synchronization indication. For example, if a third entity receives ephemeris information of a satellite or flight information of a flight platform again after sending the uplink synchronization loss indication to the first entity, the third entity may send the uplink synchronization indication to the first entity, to indicate uplink synchronization recovery.

In this scenario, as shown in FIG. 10a, after step S902b, the scheduling request processing method provided in this embodiment of this application may further include: The first entity sends indication information c to the second entity. The indication information c is used to cancel sending of the random access preamble. In other words, the indication information c indicates the second entity to cancel sending of the random access preamble.

Optionally, after receiving the indication information c, if the second entity has not sent the random access preamble, the second entity may cancel sending of the random access preamble. For example, a reason why the second entity has not sent the random access preamble may be that the random access occasion has not arrived, or the second entity receives the indication information c in a specified time period (for example, a start moment is the moment at which the second entity receives the indication information b and parses out the duration 1, and duration is the duration 1).

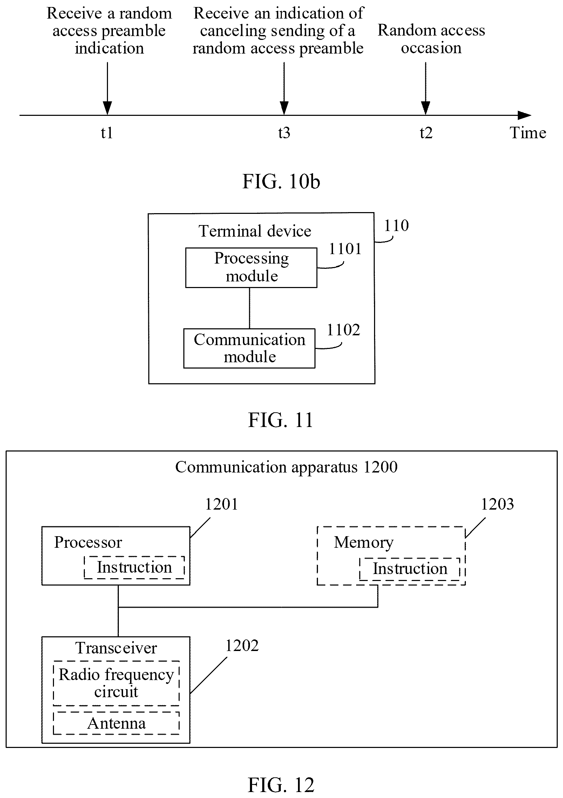

For example, as shown in FIG. 10b, an example in which the second entity receives the random access preamble indication at a moment t1, and the random access occasion is at a moment t2 is used. If the second entity receives the indication information c at a moment t3, the second entity cancels sending of the random access preamble.

Optionally, as shown in FIG. 10a, after the first entity receives the uplink synchronization indication, the first entity may further indicate the second entity to send the first SR on the valid PUCCH resource. Correspondingly, the second entity may send the first SR according to an indication of the first entity.

Based on the possible implementation, after uplink synchronization is recovered, sending of the random access preamble may be canceled. In this case, if there is a valid PUCCH resource, the first entity may indicate the second entity to send the first SR on the PUCCH resource, to reduce latency caused by execution of random access. In other words, in comparison with a solution in which a random access preamble is still sent, latency in sending the first SR can be reduced.

Optionally, when the third condition is satisfied, the first entity may further start a first timer. If the first entity receives the uplink synchronization indication before the first timer expires, the first entity may send the indication information c to the second entity.

S902c: When a third condition is satisfied, the first entity determines not to send a random access preamble indication to the second entity. For descriptions of the third condition and the random access preamble, refer to related descriptions of step S902b. Details are not described herein again.

Optionally, after step S902c, if the first entity receives the uplink synchronization indication and has a valid PUCCH resource, the first entity may indicate the second entity to send the first SR on the PUCCH resource. If the first entity receives the uplink synchronization indication, but has no valid PUCCH resource, the first entity may start a random access procedure and cancel the first SR.

Optionally, when the third condition is satisfied, the first entity may further start a second timer. Further, step S903 may include: The first entity determines not to send the random access preamble indication to the second entity before the second timer expires.

Based on step S902c, when the first entity receives the uplink synchronization loss indication, that is, the terminal device is in an uplink out-of-synchronization state, the first entity does not send the random access preamble indication to the second entity, that is, does not start random access. In other words, based on a limitation of the third condition, the terminal device can be prevented from starting random access in the uplink out-of-synchronization state, to reduce a power waste of the terminal device, and reduce a waste of resources occupied for random access.

In some implementation scenarios, when whether the terminal device is uplink synchronized is considered, if the access network device configures a PUCCH resource for the SR, when the first entity receives the uplink synchronization indication, it may be considered that the PUCCH resource is valid. Further, it may be considered that uplink transmission is allowed in a serving cell. When it is considered that the PUCCH resource is valid, the scheduling request may be processed according to the method shown in FIG. 7.

If the access network device configures a PUCCH resource for the SR, when the first entity receives the uplink synchronization loss indication, it may be considered that the PUCCH resource is invalid, in other words, the first entity has no valid PUCCH resource. In addition, the first entity may clear a HARQ buffer and not perform any uplink transmission in the serving cell.

It may be understood that, in the foregoing embodiments, the methods and/or steps implemented by the terminal device may alternatively be implemented by a component (for example, a processor, a chip, a chip system, a circuit, a logic module, or software such as a chip or a circuit) that can be used in the terminal device.

The foregoing mainly describes the solutions provided in this application. Correspondingly, this application further provides a communication apparatus. The communication apparatus is configured to implement the foregoing methods. The communication apparatus may be the terminal device in the foregoing method embodiments, or an apparatus including the foregoing terminal device, or a component that can be used in the terminal device, for example, a chip or a chip system.

It may be understood that, to implement the foregoing functions, the communication apparatus includes corresponding hardware structures and/or software modules for performing the functions. A person skilled in the art should be easily aware that with reference to units and algorithm steps in the examples described in embodiments disclosed in this specification, this application can be implemented in a form of hardware or in a form of a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes outside of the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

Optionally, an example in which the communication apparatus is the terminal device in the foregoing method embodiments is used. FIG. 11 is a diagram of a structure of a terminal device 110. The terminal device 110 includes a processing module 1101 and a communication module 1102.

In some embodiments, the terminal device 110 may further include a storage module (not shown in FIG. 11), configured to store program instructions and data.

In some embodiments, the communication module 1102 may also be referred to as a transceiver unit, and is configured to implement a sending function and/or a receiving function. The communication module 1102 may include a transceiver circuit, a transceiver machine, a transceiver, or a communication interface.

In some embodiments, the communication module 1102 may include a receiving module and a sending module, respectively configured to perform receiving steps and sending steps performed by the terminal device in the foregoing method embodiments, and/or configured to support another process of the technology described in this specification. The processing module 1101 may be configured to perform processing (for example, determining and generation) steps performed by the terminal device in the foregoing method embodiments, and/or configured to support another process of the technology described in this specification.

In a possible implementation:
The processing module 1101 is used by a first entity to determine that a first scheduling request SR in a pending state exists. When a first condition is satisfied, the communication module 1102 is used by the first entity to indicate a second entity to send the first SR. The first condition includes: The first entity has an SR transmission occasion on a valid physical uplink control channel PUCCH resource for SR configured, and the first entity receives no uplink synchronization loss indication.

Optionally, that the first entity receives no uplink synchronization loss indication includes: The first entity receives no uplink synchronization loss indication before the SR transmission occasion.

Optionally, that the first entity receives no uplink synchronization loss indication before the SR transmission occasion includes: The first entity receives no uplink synchronization loss indication after the first SR is triggered and before the SR transmission occasion.

Optionally, that the first entity receives no uplink synchronization loss indication includes: A latest indication received by the first entity is an uplink synchronization indication.

In another possible implementation:
The processing module 1101 is used by a first entity to determine that a first scheduling request SR in a pending state exists. When a second condition is satisfied, the processing module 1101 is further configured to start a random access procedure, and cancel the first SR. The second condition includes: The first entity has no valid physical uplink control channel PUCCH resource, and the first entity receives no uplink synchronization loss indication. The valid PUCCH resource corresponds to the first SR. Alternatively, when a third condition is satisfied, the communication module 1102 is used by a first entity to send a random access preamble indication to a second entity, or the processing module 1101 is used by a first entity to determine not to send a random access preamble indication to a second entity. The third condition includes: The first entity has no valid PUCCH resource, and the first entity receives an uplink synchronization loss indication. The random access preamble indication indicates the second entity to send a random access preamble.

Optionally, if the first entity receives an uplink synchronization indication, the communication module 1102 is further used by the first entity to send indication information to the second entity. The indication information is used to cancel sending of the random access preamble.

Optionally, the communication module 1102 is further used by the first entity to indicate the second entity to send the first SR on the valid PUCCH resource.

Optionally, when the third condition is satisfied, the processing module 1101 is further configured to start a first timer. That the first entity receives an uplink synchronization indication includes: The first entity receives the uplink synchronization indication before the first timer expires.

Optionally, when the third condition is satisfied, the processing module 1101 is further configured to start a second timer. That the processing module 1101 is used by the first entity to determine not to send a random access preamble indication to the second entity includes: The processing module 1101 is used by the first entity to determine not to send the random access preamble indication to the second entity before the second timer expires.

All related content of the steps in the foregoing method embodiments may be cited in function descriptions of the corresponding functional modules. Details are not described herein again.

In this application, the terminal device 110 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the terminal device 110 may be in a form of the communication apparatus 60 shown in FIG. 6a.

In an example, a function/an implementation process of the processing module 1101 in FIG. 11 may be implemented by the processor 601 in the communication apparatus 60 shown in FIG. 6a by invoking computer-executable instructions stored in the memory 603. A function/an implementation process of the communication module 1102 in FIG. 11 may be implemented by the communication interface 604 in the communication apparatus 60 shown in FIG. 6a.

In some embodiments, when the terminal device 110 in FIG. 11 is a chip or a chip system, a function/an implementation process of the communication module 1102 may be implemented by using an input/output interface (or a communication interface) of the chip or the chip system, and a function/an implementation process of the processing module 1101 may be implemented by using a processor (or a processing circuit) of the chip or the chip system.

Because the terminal device 110 provided in this embodiment may perform the foregoing method, for technical effects that can be achieved by the terminal device 110, refer to the foregoing method embodiments. Details are not described herein again.

As a possible product form, the terminal device in this embodiment of this application may be alternatively implemented through the following: one or more field programmable gate arrays (field programmable gate arrays, FPGAs), a programmable logic device (programmable logic device, PLD), a controller, a state machine, a logic gate, a discrete hardware component, any other appropriate circuit, or any combination of circuits that can perform the various functions described in this application.

As another possible product form, the terminal device in this embodiment of this application may be implemented by using a general bus architecture. For ease of description, FIG. 12 is a diagram of a structure of a communication apparatus 1200 according to an embodiment of this application. The communication apparatus 1200 includes a processor 1201 and a transceiver 1202. The communication apparatus 1200 may be a terminal device, or a chip or a module in the terminal device. FIG. 12 shows only main components of the communication apparatus 1200. In addition to the processor 1201 and the transceiver 1202, the communication apparatus may further include a memory 1203.

Optionally, the processor 1201 is mainly configured to: process a communication protocol and communication data, control the entire communication apparatus, execute a software program, and process data of the software program. The memory 1203 is mainly configured to store the software program and the data. The transceiver 1202 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave.

Optionally, the processor 1201, the transceiver 1202, and the memory 1203 may be connected through a communication bus.

After the communication apparatus is powered on, the processor 1201 may read the software program in the memory 1203, interpret and execute instructions of the software program, and process data of the software program. When data needs to be sent in a wireless manner, after performing baseband processing on to-be-sent data, the processor 1201 outputs a baseband signal to the radio frequency circuit. After performing radio frequency processing on the baseband signal, the radio frequency circuit sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1201. The processor 1201 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, embodiments of this application further provides a communication apparatus. The communication apparatus includes a processor, configured to implement the method in any one of the foregoing method embodiments.

In a possible implementation, the communication apparatus further includes a memory. The memory is configured to store a necessary computer program and necessary data. The computer program may include instructions, and the processor may invoke the instructions in the computer program stored in the memory, to instruct the communication apparatus to perform the method in any one of the foregoing method embodiments. Certainly, the memory may not be in the communication apparatus.

In another possible implementation, the communication apparatus further includes an interface circuit. The interface circuit is a code/data read/write interface circuit, and the interface circuit is configured to receive computer-executable instructions (the computer-executable instructions are stored in the memory, and may be directly read from the memory, or may be read via another component) and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions is/are executed by a computer, a function of any one of the foregoing method embodiments is implemented.

This application further provides a computer program product. When the computer program product is executed by a computer, a function of any one of the foregoing method embodiments is implemented.

A person of ordinary skill in the art may understand that, for the purpose of convenient and brief description, for a detailed working process of the foregoing system, apparatus, and unit, refer to a corresponding process in the foregoing method embodiment. Details are not described herein again.

It may be understood that the system, apparatus, and method described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may be physically separated or not, that is, may be located together in the same place or distributed on a plurality of network units. A part displayed as a unit may or may not be a physical unit. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When a software program is used to implement embodiments, all or a part of embodiments may be implemented in a form of a computer program product. The computer program product includes one or more computer instructions. When the computer program instructions are loaded and executed on a computer, all or a part of procedures (or functions) described in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that the measures cannot be combined to produce a good effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the spirit and scope of this application. In this way, this application is intended to cover these modifications and variations of this application provided that they fall within the scope of the claims of this application and their equivalent technologies.

## Claims

1. A scheduling request processing method, wherein the method comprises:
determining, by a first entity, that a first scheduling request SR in a pending state exists; and
when a first condition is satisfied, indicating, by the first entity, a second entity to send the first SR, wherein the first condition comprises: the first entity has an SR transmission occasion on a valid physical uplink control channel PUCCH resource for SR configured, and the first entity receives no uplink synchronization loss indication.

2. The method according to claim 1, wherein that the first entity receives no uplink synchronization loss indication comprises:
the first entity receives no uplink synchronization loss indication before the SR transmission occasion.

3. The method according to claim 2, wherein that the first entity receives no uplink synchronization loss indication before the SR transmission occasion comprises:
the first entity receives no uplink synchronization loss indication after the first SR is triggered and before the SR transmission occasion.

4. The method according to claim 1, wherein that the first entity receives no uplink synchronization loss indication comprises:
a latest indication received by the first entity is an uplink synchronization indication.

5. A scheduling request processing method, wherein the method comprises:
determining, by a first entity, that a first scheduling request SR in a pending state exists; and
when a second condition is satisfied, starting a random access procedure, and canceling the first SR, wherein the second condition comprises: the first entity has no valid physical uplink control channel PUCCH resource, and the first entity receives no uplink synchronization loss indication; or
when a third condition is satisfied, sending, by the first entity, a random access preamble indication to a second entity, or determining, by the first entity, not to send a random access preamble indication to a second entity, wherein the third condition comprises: the first entity has no valid PUCCH resource, and the first entity receives an uplink synchronization loss indication, and the random access preamble indication indicates the second entity to send a random access preamble, wherein
the valid PUCCH resource corresponds to the first SR.

6. The method according to claim 5, wherein after the sending, by the first entity, a random access preamble indication to a second entity, the method further comprises:
if the first entity receives an uplink synchronization indication, sending, by the first entity, indication information to the second entity, wherein the indication information is used to cancel sending of the random access preamble.

7. The method according to claim 6, wherein the method further comprises: indicating, by the first entity, the second entity to send the first SR on the valid PUCCH resource.

8. The method according to claim 6 or 7, wherein when the third condition is satisfied, the method further comprises: starting a first timer; and
that the first entity receives the uplink synchronization indication comprises:
the first entity receives the uplink synchronization indication before the first timer expires.

9. The method according to claim 5, wherein when the third condition is satisfied, the method further comprises: starting a second timer; and
the determining, by the first entity, not to send a random access preamble indication to a second entity comprises:
determining, by the first entity, not to send the random access preamble indication to the second entity before the second timer expires.

10. A communication apparatus, wherein the communication apparatus comprises a processing module and a communication module, wherein
the processing module is used by a first entity to determine that a first scheduling request SR in a pending state exists; and
when a first condition is satisfied, the communication module is used by the first entity to indicate a second entity to send the first SR, wherein the first condition comprises: the first entity has an SR transmission occasion on a valid physical uplink control channel PUCCH resource for SR configured, and the first entity receives no uplink synchronization loss indication.

11. The communication apparatus according to claim 10, wherein that the first entity receives no uplink synchronization loss indication comprises:
the first entity receives no uplink synchronization loss indication before the SR transmission occasion.

12. The communication apparatus according to claim 11, wherein that the first entity receives no uplink synchronization loss indication before the SR transmission occasion comprises:
the first entity receives no uplink synchronization loss indication after the first SR is triggered and before the SR transmission occasion.

13. The communication apparatus according to claim 10, wherein that the first entity receives no uplink synchronization loss indication comprises:
a latest indication received by the first entity is an uplink synchronization indication.

14. A communication apparatus, wherein the communication apparatus comprises a processing module and a communication module, wherein
the processing module is used by a first entity to determine that a first scheduling request SR in a pending state exists; and
when a second condition is satisfied, the processing module is further configured to: start a random access procedure, and cancel the first SR, wherein the second condition comprises: the first entity has no valid physical uplink control channel PUCCH resource, and the first entity receives no uplink synchronization loss indication; or
when a third condition is satisfied, the communication module is used by the first entity to send a random access preamble indication to a second entity, or the processing module is used by the first entity to determine not to send a random access preamble indication to a second entity, wherein the third condition comprises: the first entity has no valid PUCCH resource, and the first entity receives an uplink synchronization loss indication, and the random access preamble indication indicates the second entity to send a random access preamble, wherein
the valid PUCCH resource corresponds to the first SR.

15. The communication apparatus according to claim 14, wherein
if the first entity receives an uplink synchronization indication, the communication module is further used by the first entity to send indication information to the second entity, wherein the indication information is used to cancel sending of the random access preamble.

16. The communication apparatus according to claim 15, wherein the communication module is further used by the first entity to indicate the second entity to send the first SR on the valid PUCCH resource.

17. The communication apparatus according to claim 15 or 16, wherein when the third condition is satisfied, the processing module is further configured to start a first timer; and
that the first entity receives the uplink synchronization indication comprises:
the first entity receives the uplink synchronization indication before the first timer expires.

18. The communication apparatus according to claim 14, wherein when the third condition is satisfied, the processing module is further configured to start a second timer; and
that the processing module is used by the first entity to determine not to send a random access preamble indication to a second entity comprises:
the processing module is used by the first entity to determine not to send the random access preamble indication to the second entity before the second timer expires.

19. A communication apparatus, wherein the communication apparatus comprises a processor, and the processor is configured to run a computer program or instructions, to cause the communication apparatus to perform the method according to any one of claims 1 to 4, or cause the communication apparatus to perform the method according to any one of claims 5 to 9.

20. A computer-readable storage medium, wherein the computer-readable storage medium stores computer instructions or a program, and when the computer instructions or the program are/is run on a computer, the method according to any one of claims 1 to 4 is performed, or the method according to any one of claims 5 to 9 is performed.

21. A computer program product, wherein the computer program product comprises computer instructions, and when a part or all of the computer instructions are run on a computer, the method according to any one of claims 1 to 4 is performed, or the method according to any one of claims 5 to 9 is performed.
